# EUROPEAN PATENT SPECIFICATION

(11) **EP 1 089 016 B1**
(45) Date of publication and mention of the grant of the patent: **11.12.2002**
(21) Application number: 00120862.8
(22) Date of filing: 25.09.2000
(51) Int. Cl.: F16H 7/22, F16G 7/04, B66F 3/00

(54) **A tool for mounting a transmission belt on to a pulley and for demounting a belt from a pulley**
Werkzeug zur Montage und Demontage von Keilriemen auf oder von einer Keilriemenscheibe
Outil pour monter ou démonter une courroie de transmission sur ou d'une poulie

(30) Priority: 28.09.1999 IT TO990834
(43) Date of publication of application: 04.04.2001
(73) Proprietor: FIAT AUTO S.p.A., 10135 Torino (IT)
(72) Inventor: Dell' Orco Vito, 10138 Torino (IT)
(74) Representative: Cerbaro, Elena, Dr.

(56) References cited:
- US-A- 4 244 559
- US-A- 4 380 326
- US-A- 4 529 170
- US-A- 4 708 320
- US-A- 5 653 654

## Description

The present invention relates to a tool for mounting and de-mounting a transmission belt onto and from a pulley. Such a tool is known from document US-A-565 3654.

As is known, in belt transmission units the transmission belt passes around associated pulleys comprising respective annular outer seatings engaged, in use, by the belt itself.

Normally, for fitting a belt onto a pulley and for removal of a belt from an associated pulley, general purpose tools are used, for example screw drivers, which are not, in general, able to perform these operations in a correct manner, and in particular which cause incisions and lacerations to the belts themselves which, consequently, can have a relatively short service life and need frequent replacement.

The object of the present invention is that of providing a tool for mounting a transmission belt onto a pulley and for de-mounting a belt from an associated pulley, which is free from the above-explained disadvantage, and, in particular, is a dedicated tool for performing these operations.

According to the present invention there is provided a tool for mounting a transmission belt onto a pulley and for de-mounting a belt from a pulley, characterised in that it comprises a cylindrical bearing wall tapered and curved along a longitudinal direction and able in use to be positioned on an outer cylindrical surface of the said pulley and to be forced radially between the said belt and the said pulley to turn together with the pulley itself; and a deflection wall extending transversely of the said bearing wall along a longitudinal edge of the bearing wall itself, to define, in use, an abutment for a lateral surface of the said belt to deflect the belt upon rotation of the said pulley about its axis.

The invention will now be described with reference to the attached drawings which illustrate a non-limitative embodiment thereof, in which:
Figures 1, 2 and 3 are, respectively, a side view, a plan view and a front view of a preferred embodiment of the tool for mounting a transmission belt onto a pulley and for de-mounting a belt from an associated pulley according to the present invention; and
Figures 4 and 5 illustrate in perspective and on a reduced scale the tool of the preceding Figures used for mounting and, respectively, de-mounting a transmission belt.

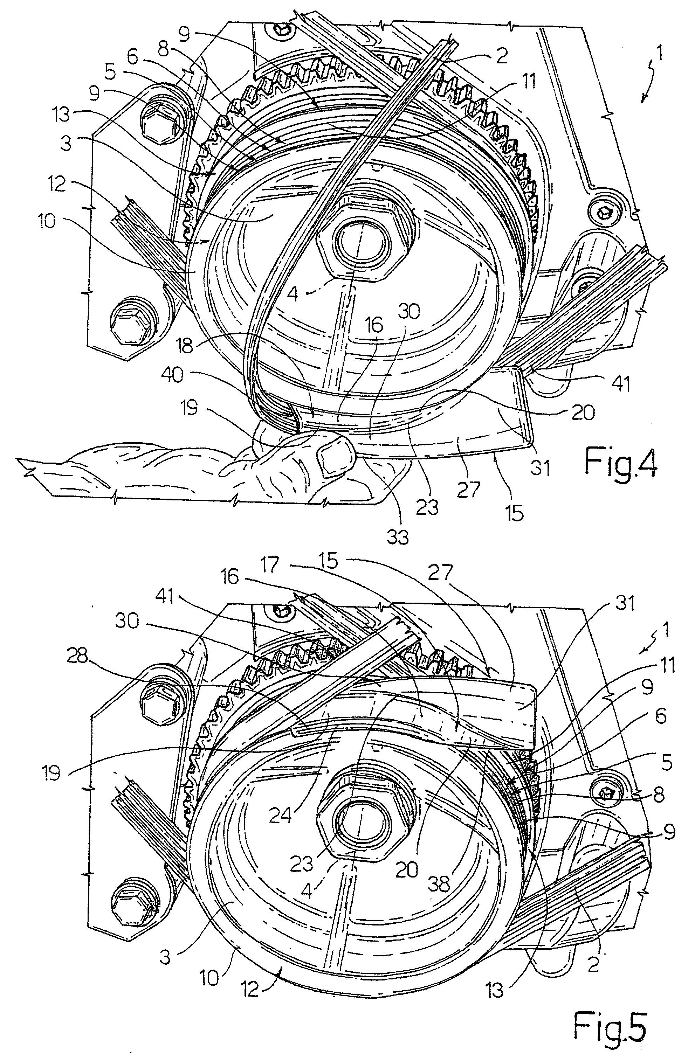

In Figures 4 and 5 the reference numeral 1 generally indicates a belt transmission unit and, in particular, a transmission unit of a motor vehicle interposed between a drive shaft and a shaft of an auxiliary unit (not illustrated). The unit 1 comprises a resilient toothed transmission belt 2 of known type and, in particular, of the type commonly indicated with the term "poly-V", a pulley (not illustrated) fitted on the shaft of the auxiliary unit, and a pulley 3 fitted on the drive shaft to rotate about its axis 4.

The pulley 3 is delimited by an outer cylindrical surface 5 which comprises an intermediate axial section 6 delimiting an annular seat 8 for the belt 2, and two axial end sections 9 radially delimiting respective terminal rings 10 and 11. The rings 10 and 11 are delimited axially by respective outer surfaces 12 and respective inner surfaces 13 which define respective axial shoulders of the seat 8.

To perform the operations for fitting the belt 2 onto the pulley 3 and for removal of the belt 2 from the pulley 3 there is provided a dedicated mounting/de-mounting tool indicated 15 in the attached drawings.

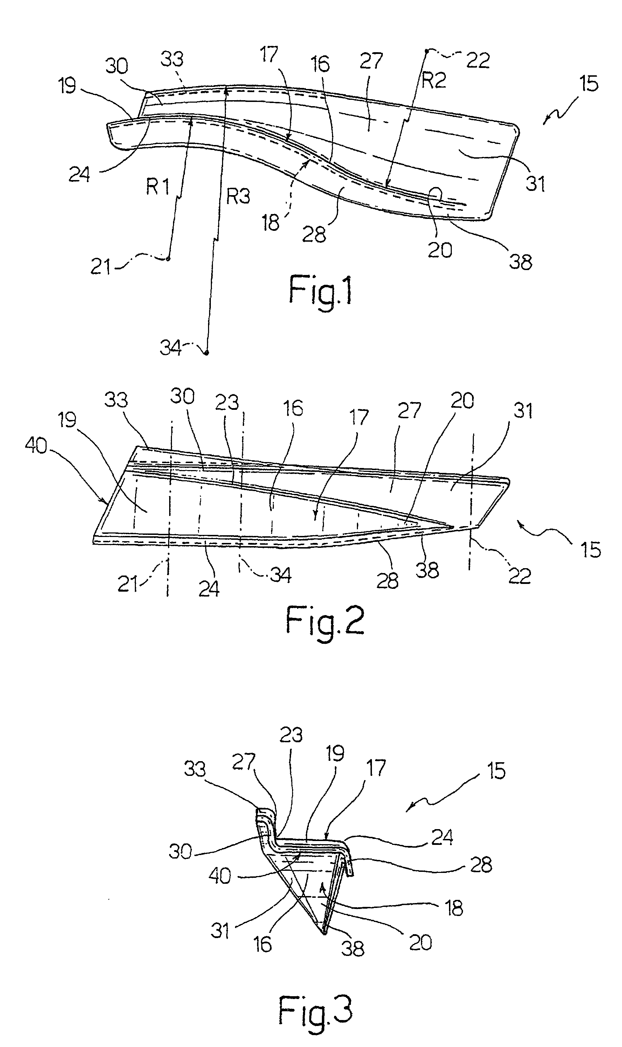

As illustrated, in particular, in Figures from 1 to 3, the tool 15 is made in one piece, preferably of metal, and comprises a wall 16 extending in a curved longitudinal direction and delimited by two surfaces 17 and 18 parallel to one another. The wall 16 has an S-shape lateral profile (Figure 1) and comprises a front end portion 19 and a cylindrical rear end portion 20 which have respective axes 21 and 22 extending parallel to one another on opposite sides of the wall 16. In particular the portion of 20 is concave towards the surface 17 whilst the portion 19 is concave towards the surface 18 and has a radius of curvature R1 slightly greater than the outer radius of the pulley 3 and less than the radius of curvature R2 of the portion 20.

With reference, in particular, to Figure 2, the wall 16 is tapered longitudinally from the portion 19 towards the portion 20 in such a way as to present, in plan, a substantially triangular shape having two longitudinal converging edges 23 and 24 of which the edge 24 is substantially orthogonal to the axis 21 and is joined to two opposite lateral walls 27 and 28 which extend along the edge 23 and the edge 24 respectively and form with the wall 16 respective obtuse angles equal to one another and preferably about 100°.

As illustrated in Figures 1 and 2, the wall 27 is a flat wall comprising two related end sections 30 and 31 adjacent the portion 19 and the portion 20 respectively, and is tapered from the section 31 towards the section 30. The section 30 ends with a projection 33 which extends about an axis 34 parallel to the axis 21 and projects from the opposite side of the wall 16 from the wall 27; it is concave in the same sense as the concavity of the portion 19 and has a radius of curvature R3 greater than R1.

The wall 28, on the other hand, is substantially flat and comprises an end 38 adjacent the portion 20 converging towards the wall 27 to merge with the wall 27 itself.

At the opposite end of the tool 15 the wall 16 has a dimension measured parallel to the axis 21 substantially equal to the width of the belt 2 and is delimited by a Font surface 40 inclined with respect to the axis 21 and forming an acute angle with the wall 27.

With reference to Figure 4, in order to mount the belt 2, in use, onto the pulley 3, the wall 28 is engaged with the inner surface of the ring 10 retaining the wall 16 manually against the section 9 of the surface 5 in a region close to one run or branch of the belt 2 in such a way that the edge 24 is disposed in correspondence with the section 9 with the wall 16 extending so as to project out from the pulley 3.

The belt 2 is passed around the pulley of the auxiliary unit and coupled to the tool 15 by positioning it in contact with the surface 17 and against the wall 27. During rotation of the drive shaft in a clockwise sense, as viewed in Figure 4, about the axis 4, the tool 15 is manipulated to interpose the wall 27 between the belt 2 and the pulley 3 in such a way as to force the wall 16 between the belt 2 and pulley 3 upon elastic deformation of the belt 2 so as to cause the tool 15 to rotate together with the pulley 3.

The wall 27 defines an abutment for a lateral surface 41 of the belt 2 so that, during the rotation of the pulley 3 about the axis 4, the wall 27 axially deflects the belt 2 which progressively passes over the surface 17 towards the pulley 3, passing over the ring 10 and engaging in the seat 8.

With reference to Figure 5, in order to de-mount the belt 2 from the pulley 3 the wall 28 is engaged with the outer surface 12 of the ring 10 in a region close to an outgoing branch of the belt 2 by positioning the wall 16 in contact with the surface 5 in the seat 8 with the projection 33 bearing against the ring 11.

Upon rotation of the drive shaft about the axis 4 in an anticlockwise sense as seen in Figure 5, that is to say in the opposite sense of rotation to that in which the motor operates, the wall 16 wedges between the belt 2 and the pulley 3, remaining forced between the belt 2 and the pulley 3 itself upon the elastic deformation of the belt 2, so that the tool 15 starts to turn together with the pulley 3.

After this rotation the section 31 of the wall 27 lies alongside the lateral surface 41 of the belt 2 and diverts the belt 2 which slides axially and progressively over the surface 19 towards the outside of the pulley 3 passing over the ring 10 until it is completely uncoupled from the seat 8.

From the above it is evident that the tool 15 described is a dedicated tool both for mounting the belt 2 onto the pulley 3 and for de-mounting the belt 2 from the pulley 3 in a relatively simple and rapid manner without risk of damage to the belt 2, therefore simplifying the operations for replacement of the belt 2.

In fact, the tool 15 interposed and forced in use between the belt 2 and pulley 3 prevents the belt 2 from rubbing against the ring 2 or against other parts of the pulley 3, whilst the wall 27 acts as a deflector and axially guides the belt 2 simply upon rotation of the pulley 3.

Moreover, the wall 28 defines a precise reference for positioning the edge 24 with respect to the ring 10 whilst the particular shape of the walls 16, 27, 28 facilitates and renders gradual the entry of the belt 2 into the seat 8 and its exit from the seat 8, preventing the belt 2 from coming into contact with sharp corners.

From the above it is evident that the tool 15 described and illustrated can have modifications and variations introduced thereto which do not depart from the field of protection of the present invention.

In particular, the tool 15 could have different geometric proportions from those illustrated to adapt it, for example, to a pulley 3 different from that illustrated, and the walls 16, 27, 28 could have different shapes from those illustrated and described by way of example.

## Claims

1. A tool (15) for mounting a transmission belt (2) onto a pulley (3) and for de-mounting a belt (2) from a pulley (3), **characterised in that** it comprises a cylindrical bearing wall 16 tapered and curved in a longitudinal direction and positionable, in use, on an outer cylindrical surface (5) of the said pulley (3) to be forced radially between the said belt (2) and the said pulley (3) to rotate together with the pulley (3); and a deflection wall (27) extending transversely of the said bearing wall (16) along a first longitudinal edge (23) of the bearing wall (16), to define in use an abutment for a lateral surface (41) of the said belt (2) to deflect the belt (2) upon rotation of the said pulley (3) about its axis (4).

2. A tool according to claim 1, **characterised in that** the said bearing wall (16) has a second longitudinal edge (24) converging towards the said first longitudinal edge (23) engagement means (28) being provided for co-operating; in use, with reference means (10) carried by the said pulley (3) to position the said second longitudinal edge (24) along an axial end section (9) of the said outer cylindrical surface (5).

3. A tool according to claim 2, **characterised in that** the said attachment means (28) extend transversely of the said bearing wall (16) on the opposite side from the said deflection wall (27).

4. A tool according to claim 3, **characterised in that** the said attachment means (28) comprise an engagement wall extending along the said second longitudinal edge (24).

5. A tool according to claim 4, **characterised in that** the said engagement and deflection walls (28, 27) form, with the said bearing wall (16), respective equal angles.

6. A tool according to claim 4 or claim 5, **characterised in that** said bearing wall (16) and engagement wall (28) form an obtuse angle with one another.

7. A tool according to any preceding claim, **characterised in that** the said bearing wall (16) and deflection wall (27) form an obtuse angle with one another.

8. A tool according to any preceding claim, **characterised in that** the said bearing wall (16) includes a frontal end portion (19) and a rear end portion (20) having respective axes (21,22) parallel to one another and respective radii of curvature different from one another.

9. A tool according to claim 8, **characterised in that** the said end portions (19, 20) have respective opposite concavities.

10. A tool according to claim 8 or claim 9, **characterised in that** the said front end portion (19) is delimited by a front surface (40) inclined with respect to the said axis (21) of the front end portion (19) itself.

11. A tool according to any preceding claim, **characterised in that** the said deflection wall (27) is tapered in an opposite sense from the tapering of the said bearing wall (16).

12. A tool according to any preceding claim, **characterised in that** it includes a bearing projection (33) extending from an end section (30) of the said deflection wall (27) opposite from the said bearing wall (16).

13. A tool according to any preceding claim, **characterised in that** the said bearing wall (16) carries the said deflection wall (27) and engagement wall (28).

14. A tool according to any preceding claim, **characterised in that** it is made in one piece.

## Patentansprüche

1. Werkzeug (15) zum Montieren eines Treibriemens (2) auf einer Riemenscheibe (3) und zum Demontieren eines Riemens (2) von einer Riemenscheibe (3), **dadurch gekennzeichnet, dass** es eine zylindrische Auflagewand (16), die sich verjüngend und gekrümmt in Längsrichtung verläuft und bei der Benutzung auf einer äußeren zylindrischen Fläche (5) der Riemenscheibe (3) positionierbar ist, so dass sie radial zwischen dem Riemen (2) und die Riemenscheibe (3) gedrückt wird und sich dadurch zusammen mit der Riemenscheibe (3) dreht, und eine Ablenkwand (27) umfasst, die quer zur Auflagewand (16) entlang einer ersten Längskante (23) der Auflagewand (16) verläuft, um bei der Benutzung eine Anlage für eine Seitenfläche (41) des Riemens (2) zu bilden und dadurch den Riemen (2) bei einer Drehung der Riemenscheibe (3) um ihre Achse (4) abzulenken.

2. Werkzeug nach Anspruch 1, **dadurch gekennzeichnet, dass** die Auflagewand (16) eine zweite Längskante (24) aufweist, die zur ersten Längskante (23) zuläuft, wobei Eingriffseinrichtungen (28) vorgesehen sind, die bei der Benutzung mit Bezugseinrichtungen (10) zusammenarbeiten, die die Riemenscheibe (3) trägt, um die zweite Längskante (24) entlang eines axialen Endabschnittes (9) der äußeren zylindrischen Fläche (5) anzuordnen.

3. Werkzeug nach Anspruch 2, **dadurch gekennzeichnet, dass** die Anbringungseinrichtung (28) quer zur Auflagewand (16) auf der der Ablenkwand (27) gegenüber liegenden Seite verläuft.

4. Werkzeug nach Anspruch 3, **dadurch gekennzeichnet, dass** die Anbringungseinrichtung (28) eine Eingriffswand umfasst, die an der zweiten Längskante (24) entlang verläuft.

5. Werkzeug nach Anspruch 4, **dadurch gekennzeichnet, dass** die Eingriffs- und Ablenkwände (28, 27) zusammen mit der Auflagewand (16) jeweils gleiche Winkel einschließen.

6. Werkzeug nach Anspruch 4 oder 5, **dadurch gekennzeichnet, dass** die Auflagewand (16) und die Eingriffswand (28) einen stumpfen Winkel miteinander bilden.

7. Werkzeug nach einem vorhergehenden Anspruch, **dadurch gekennzeichnet, dass** die Auflagewand (16) und die Ablenkwand (27) einen stumpfen Winkel miteinander bilden.

8. Werkzeug nach einem vorhergehenden Anspruch, **dadurch gekennzeichnet, dass** die Auflagewand (16) einen vorderen Endteil (19) und einen hinteren Endteil (20) aufweist, die jeweilige Achsen (21, 22) parallel zueinander und jeweils voneinander verschiedene Krümmungsradien haben.

9. Werkzeug nach Anspruch 8, **dadurch gekennzeichnet, dass** die Endteile (19, 20) jeweils entgegengesetzte Konkavitäten haben.

10. Werkzeug nach Anspruch -8 oder 9, **dadurch gekennzeichnet, dass** der vordere Endteil (19) von einer Vorderfläche (40) begrenzt ist, die schräg bezüglich der Achse (21) des vorderen Endteils (19) selbst verläuft.

11. Werkzeug nach einem vorhergehenden Anspruch, **dadurch gekennzeichnet, dass** die Ablenkwand (27)_ in einer Richtung zuläuft, die zu der Richtung entgegengesetzt ist, in der die Auflagewand (16) zuläuft.

12. Werkzeug nach einem vorhergehenden Anspruch, **dadurch gekennzeichnet, dass** es einen Lagervorsprung (33) aufweist, der von einem Endabschnitt (30) der Ablenkwand (27) der Auflagewand (16) gegenüber ausgeht.

13. Werkzeug nach einem vorhergehenden Anspruch, **dadurch gekennzeichnet, dass** die Auflagewand (16) die Ablenkwand (27) und die Eingriffswand (28) trägt.

14. Werkzeug nach einem vorhergehenden Anspruch, **dadurch gekennzeichnet, dass** es in einem Stück ausgebildet ist.

## Revendications

1. Outil (15) pour le montage d'une courroie de transmission (2) sur une poulie (3) et pour le démontage d'une courroie (2) d'une poulie (3), **caractérisé en ce qu'**il comprend une paroi de portée cylindrique (16) effilée et courbe dans une direction longitudinale et positionnable, en utilisation, sur une surface cylindrique extérieure (5) de la dite poulie (3) de façon à être forcée radialement entre la dite courroie (2) et la dite poulie (3) afin de tourner avec la poulie (3) ; et une paroi de déviation (27) s'étendant transversalement à la dite paroi de portée (16) le long d'un premier bord longitudinal (23) de la paroi de portée (16), pour définir en utilisation une butée pour une surface latérale (4) de la dite courroie (2) afin de dévier la courroie (2) lors de la rotation de la dite poulie (3) autour de son axe (4).

2. Outil selon la revendication 1, **caractérisé en ce que** la dite paroi de portée (16) comprend un deuxième bord longitudinal (24) qui converge vers le dit premier bord longitudinal (23), des moyens d'engagement (28) étant prévus pour coopérer, en utilisation, avec des moyens de référence (10) portés par la dite poulie (3) afin de positionner le dit deuxième bord longitudinal (24) le long d'une partie d'extrémité axiale (9) de la dite surface cylindrique extérieure (5).

3. Outil selon la revendication 2, **caractérisé en ce que** les dits moyens d'engagement (28) s'étendent transversalement à la dite paroi de portée (16) sur le côté opposé par rapport à la dite paroi de déviation (27).

4. Outil selon la revendication 3, **caractérisé en ce que** les dits moyens d'engagement (28) comprennent une paroi d'engagement s'étendant le long du dit deuxième bord longitudinal (24).

5. Outil selon la revendication 4, **caractérisé en ce que** les dites parois d'engagement et de déviation (28, 27) forment, avec la dite paroi de portée (16), des angles respectifs égaux.

6. Outil selon la revendication 4 ou la revendication 5, **caractérisé en ce que** la dite paroi de portée (16) et la paroi d'engagement (28) forment un angle obtus l'une avec l'autre.

7. Outil selon une quelconque des revendications précédentes, **caractérisé en ce que** la dite paroi de portée (16) et la dite paroi de déviation (27) forment un angle obtus l'une avec l'autre.

8. Outil selon une quelconque des revendications précédentes, **caractérisé en ce que** la dite paroi de portée (16) comprend une partie d'extrémité avant (19) et une partie d'extrémité arrière (20) ayant des axes respectifs (21, 22) mutuellement parallèles et des rayons de courbure respectifs mutuellement différents.

9. Outil selon la revendication 8, **caractérisé en ce que** les dites parties d'extrémité (19, 20) ont des concavités respectives opposées.

10. Outil selon la revendication 8 ou la revendication 9, **caractérisé en ce que** la dite partie d'extrémité avant (19) est limitée par une surface avant (40) inclinée par rapport au dit axe (21) de la partie d'extrémité avant (19) elle-même.

11. Outil selon une quelconque des revendications précédentes, **caractérisé en ce que** la dite paroi de déviation (27) est effilée dans un sens opposé à celui de la dite paroi de portée (16).

12. Outil selon une quelconque des revendications précédentes, **caractérisé en ce qu'**il comprend une saillie de portée (33) s'étendant à partir d'une partie d'extrémité (30) de la dite paroi de déviation (27) à l'opposé de la dite paroi de portée (16).

13. Outil selon une quelconque des revendications écédentes, **caractérisé en ce que** la dite paroi de portée (16) porte la dite paroi de déviation (27) et la dite paroi d'engagement (28).

14. Outil selon une quelconque des revendications précédentes, **caractérisé en ce qu'**il est fabriqué en une seule pièce.
